# EUROPÄISCHE PATENTANMELDUNG

(11) **EP 1 533 397 A2**
(43) Veröffentlichungstag der Anmeldung: **25.05.2005**
(21) Anmeldenummer: 04026400.4
(22) Anmeldetag: 06.11.2004
(51) Int. Cl.: C23C 28/02, C25D 5/10, C23C 18/31

(54) **Verfahren zur Abscheidung von nickel- und chrom(VI)-freien, metallischen Mattschichten**

(30) Priorität: 21.11.2003 DE 10354760
(71) Anmelder: ENTHONE INC., West Haven, Connecticut 06516 (US)
(72) Erfinder: Dr. Andreas Möbius, 41564 Kaarst (DE); Brecht, Joachim, 75210 Keltem-Dietlingen (DE); Pies, Peter, 51069 Köln (DE); Schaaf, Hans-Paul, 42899 Remscheid (DE)
(74) Vertreter: Stenger, Watzke & Ring Patentanwälte

(57) **Zusammenfassung**

Die vorliegende Erfindung betrifft ein Verfahren zur Abscheidung von Nickel und Chrom (VI) freien metallischen Schichten auf Substraten und diese Schichten an sich. Das erfindungsgemäße Verfahren weist die Verfahrensschritte
a) Beschichten eines Substrats mit einer ersten matten Schicht, und
b) metallisieren der ersten matten Metallschicht mit einer zweiten, den Matteffekt der ersten Metallschicht übernehmenden Mattschicht, zum Erhalt eines beschichteten Substrats mit einer mattierten Oberfläche, auf, und welches dadurch gekennzeichnet ist, daß die erste matte Metallschicht nickelfrei ist und die zweite Metallschicht frei von Nickel und Chrom (VI) ist, wobei das Metall zur Herstellung der ersten matten Metallschicht mindestens ein Metall der Gruppe bestehend aus Kupfer, Silber, Zinn, Zink oder eine Legierung die keinen Nickel enthält ist, und das Metall zur Herstellung der zweiten Metallschicht mindestens ein Metall der Gruppe bestehend aus Kupfer, Zinn, Zink, Chrom (III), Silber, Gold, Ruthenium, Platin, Palladium oder eine Legierung dieser ist.

## Beschreibung

Die vorliegende Erfindung betrifft ein Verfahren zur Abscheidung von Nickel und Chrom(VI) freien metallischen Mattschichten auf Substraten.

Metallische Mattschichten werden zur funktionellen oder dekorativen Oberflächenveredelung in unterschiedlichsten Bereichen eingesetzt. So werden z.B. im Bereich der Schmuckherstellung Oberflächen aus ästhetischen Gründen mit entsprechenden Mattschichten überzogen. Im Bereich von Haushaltsgeräten oder gastrotechnischen Geräten oder Einrichtungen werden Oberflächen aus dekorativen Gründen oft mit Mattschichten ausgestattet.

Die hierbei bisher im Stand der Technik bekannten Mattschichten werden aus nikkel- und für die Deckschicht meist aus chrom(VI)haltigen Elektrolyten abgeschieden und sind somit nickelhaltig. Obwohl Chrom(VI) in der Endschicht bei sorgfältiger Arbeitsweise inbesondere beim Spülen nach dem Verchromen nicht nachweisbar ist, bestehen teilweise Bedenken gegenüber Schichten welche aus solchen Elektrolyten abgeschieden worden sind.

Nickel kann bei intensivem Hautkontakt oder bei Aufnahme von Nickelspuren über Lebensmittel zu allergenen Reaktionen führen. Im Fall von Schmuckstücken kann gerade der enge Hautkontakt und die durch Schweiß und Feuchtigkeit geförderte Nickeldesorption zu starken Hautirritationen führen. Im Fall von Haushaltsgeräten bzw. gastrotechnischen Einrichtungen oder Geräten kann der Kontakt von Lebensmitteln mit den mattierten Oberflächen unter Umständen zur Auslösung von Nickel führen, da die Chromschicht die mikrostrukturierte Oberfläche nicht immer ausreichend abdeckt.

Aus den oben genannten Gründen ist das Bestreben gerade in der Schmuckindustrie sowie im Bereich der Herstellung von Haushaltsgeräten und gastrotechnischen Geräten oder Einrichtungen groß, solche Oberflächenbeschichtungen zu vermeiden.

Da jedoch mattierte Oberflächen eine große ästhetische Wirkung, besitzen finden entsprechende Oberflächen in den genannten Bereichen zur Zeit trotz ihrer Nachteile weite Verwendung.

Unter Berücksichtigung des Vorgenannten liegt der Erfindung die **Aufgabe** zugrunde, ein Verfahren zur Abscheidung von matten, Nickel und Chrom(VI) freien Metallschichten sowie solche Schichten an sich bereitzustellen.

Diese Aufgabe wird erfindungsgemäß durch ein Verfahren zur Abscheidung von Nickel und Chrom(VI) freien metallischen Mattschichten aufweisend die Verfahrensschritte
a) Beschichten eines Substrats mit einer ersten matten Schicht
b) Metallisieren der ersten matten Metallschicht mit einer zweiten, den Matteffekt der ersten Metallschicht übernehmenden Metallschicht, zum Erhalt eines beschichteten Substrats mit einer mattierten Oberfläche **gelöst,** welches
dadurch gekennzeichnet ist, daß die erste matte Metallschicht nickelfrei ist und die zweite Metallschicht frei von Nickel und Chrom(VI) ist, wobei das Metall zur Herstellung der ersten matten Metallschicht mindestens ein Metall der Gruppe bestehend aus Kupfer, Silber, Zinn, Zink oder eine Legierung die kein Nickel enthälten ist, und das Metall zur Herstellung der zweiten Metallschicht mindestens ein Metall der Gruppe bestehend aus Kupfer, Zinn, Zink, Chrom(III), Silber, Gold, Ruthenium, Platin, Palladium oder eine Legierung dieser ist.

Als besonders geeignet stellte sich bei dem erfindungsgemäßen Verfahren die Verwendung von Mattkupferschichten als erste matte Metallschicht heraus. Solche Kupferschichten sind über die im Stand der Technik bekannten Verfahren der galvanischen oder chemischen Metallisierung zu erhalten.

Als zweite, den Matteffekt der ersten Metallschicht übernehmende Metallschicht erwiesen sich insbesondere Metallschichten aus Kupfer-Zinn-haltigen Legierungen wie Weißbronzen als günstig. Solche Schichten vermitteln den ästhetischen Eindruck von verchromten matten Nickelschichten, weisen jedoch kein allergenes Potential auf und besitzen eine hinreichende mechanische Stabilität und Korrosionsbeständigkeit.

Sollte die mechanische Stabilität aus anwendungstechnischen Gründen erhöht werden, wird mit dem erfindungsgemäßen Verfahren vorgeschlagen, auf die zweite, den Matteffekt der ersten Metallschicht übernehmende Metallschicht eine dritte Metallschicht aufzumetallisieren, welche über entsprechende mechanische Eigenschaften verfügt. Als geeignet erweisen sich hier die Abscheidung einer Chromschicht oder Chromlegierungsschicht wie beispielsweise Chromlegierungen mit Vanadium, Molybdän, Kohlenstoff, Phoshor oder Wolfram aus Chrom(III)-haltigen Elektrolyten oder durch eine CVD bzw. PVD aufgebrachte Hartschichten wie Chromcarbid, Titaniumnitrid/-carbid, Zirkoniumnitrid/-carbid, Siliziumdioxid oder DLC (diamond like carbon) oder Kombinationen aus diesen Schichten.

Im folgenden seien beispielhaft und nicht begrenzend Elektrolyten beschrieben, welche geeignet sind, das erfindungsgemäße Verfahren durchzuführen. Es sind dies saure Mattkupferelektrolyte, welche durch Zusätze matte Schichten erzeugen:

### Beispiel 1:

- 18 - 25 g/l: CU²⁺
- 180 - 210 g/l: H₂SO₄
- 30 - 80 mg/l: Cl⁻
- 1 - 10 ml/l: Cuprostar LP1 Zusatz der Firma Enthone
- 18 - 35 °C: Temperaturbereich
- 1 - 5 A/dm²: Stromdichte

Weitere Beispiel für im erfindungsgemäßen Verfahren einsetzbare Elektrolyte zur Abscheidung von matten Kupferschichten sind stromlose Kupferelektrolyte wie z.B. ENPLATE CU 872 der Firma Enthone.

Eine mittels eines wie zuvor beispielhaft beschriebenen Kupferelektrolyten erhaltene Mattkupferschicht läßt sich erfindungsgemäß im nächsten Verfahrensschritt mit einer Kupfer-Zinn-Legierung metallisieren. Ein vorteilhafter Elektrolyt zur galvanischen Abscheidung von Kupfer-Zinn-Legierungen wie Weißbronzen enthält im wesentlichen Zinn- und Kupferionen in Form von Cyaniden, geeinete Zusätze Alkalilauge und freies Cyanid. Alkylsulfonsaure Elektrolyte welche ein aromatisches, nichtionisches Netzmittel enthalten sind ebenfalls einsetzbar. Optional können zusätzliche Stabilisatoren und/oder Komplexbildner, anionische und/oder nichtionische, aliphatische Netzmittel, Antioxidationsmittel sowie weitere Metallsalze im Elektrolyten enthalten sein.

Die hauptsächlich zur Abscheidung von Bronzen in den Elektrolyten eingebrachten Metalle Zinn und Kupfer können vornehmlich als Cyanide und im Fall der sauren Elektrolyte als Salze von Alkylsulfonsäuren, vorzugsweise als Methansulfonate oder als Salze von Mineralsäuren, vorzugsweise als Sulfate vorliegen. Als Zinnsalz wird besonders bevorzugt das Zinnmethansulfonat im Elektrolyten verwendet, welches vorteilhafterweise in einer Menge von 5 bis 195 g/l Elektrolyt dem Elektrolyten zugegeben wird. Dies entspricht einem Einsatz von 2 bis 75 g/l an 2-wertigen Zinnionen. Als Kupfersalz wird besonders bevorzugt das Kupfermethansulfonat im Elektrolyten verwendet, welches vorteilhafterweise in einer Menge von 8 bis 280 g/l Elektrolyt dem Elektrolyten zugegeben wird. Dies entspricht einem Einsatz von 2 bis 70 g/l an 2-wertigen Kupferionen.

Da die Abscheidegeschwindigkeit im sauren Milieu deutlich höher ist, wird dem Elektrolyten eine Säure, bevorzugt eine Mineral- und/oder eine Alkylsulfonsäure in Mengen von 140 bis 382 g/l Elektrolyt zugegeben. Als besonders vorteilhaft stellte sich der Einsatz von Methansulfonsäure heraus, da diese zum einen eine vorteilhafte Löslichkeit der Metallsalze bedingt und zum anderen aufgrund ihrer Säurestärke die Einstellung des für das Verfahren benötigten pH-Wertes vorgibt bzw. erleichtert. Zudem hat die Methansulfonsäure die vorteilhafte Eigenschaft, wesentlich zur Stabilität des Bades beizutragen.

Zur näheren Erläuterung der Erfindung werden im Folgenden beispielhaft Elektrolyten zur Abscheidung von Weißbronzen dargestellt, auf die sich die Erfindung jedoch nicht beschränken läßt.

### Beispiel 2:

- 5 g/l: Sn²⁺
- 10 g/l: Cu²⁺
- 240 g/l: Methansulfonsäure
- 32,2 g/l: aromatisches, nichtionisches Netzmittel
- 2 g/l: Antioxidationsmittel
- 25 g/l: Stabilisator / Komplexbildner

### Beispiel 3:

- 18 g/l: Sn²⁺
- 2 g/l: Cu²⁺
- 258 g/l: Methansulfonsäure
- 9 g/l: aromatisches, nichtionisches Netzmittel

### Beispiel 4:

- 17,0 - 25,0 g/l: Sn²⁺
- 10,0 ― 15,0 g/l: CU²⁺
- 1,3 ― 1,9 g/l: Zn²⁺
- 45,0 - 60,0 g/l: KCN
- 12,4 - 12,9: pH-Wert
- 0.5 - 2 ml/l: Netzmittel
- 0,1 - 1 ml/l: Glanzzusatz
- 50,0 - 60,0 °C: Temperaturbereich
- 2,0 - 4,0 A/dm²: Stromdichte

### Beispiel 5: Bronzex WMF der Firma Enthone

- 8,0 - 12,0 g/l: Sn²⁺
- 5,0 - 10,0 g/l: Cu²⁺
- 1,0 - 3,0 g/l: Zn²⁺
- 23,0 - 30,0 g/l: KCN
- 0,1 - 2 ml/l: ATC Lösung No. 4 der Firma Enthone
- 0,1 - 2 ml/l: BRONZEX WMF Brightener NG der Firma Enthone
- 13,2 - 13,6: pH-Wert
- 39,0 - 45,0 °C: Temperaturbereich
- 0,3 - 0,7 A/dm²: Stromdichte

## Patentansprüche

1. Verfahren zur Abscheidung von Nickel und Chrom (VI) freien metallischen Mattschichten aufweisend die Verfahrensschritte
a) Beschichten eines Substrats mit einer ersten matten Metallschicht
b) Metallisieren der ersten matten Metallschicht mit einer zweiten, den Matteffekt der ersten Metallschicht übernehmenden Metallschicht, zum Erhalt eines beschichteten Substrats mit einer mattierten Oberfläche,
**dadurch gekennzeichnet, daß** die erste matte Metallschicht nickelfrei ist und die zweite Metallschicht frei von Nickel und Chrom (VI) ist, wobei das Metall zur Herstellung der ersten matten Metallschicht mindestens ein Metall der Gruppe bestehend aus Kupfer, Silber, Zinn, Zink oder Legierung die kein Nikkel enthält ist, und das Metall zur Herstellung der zweiten Metallschicht mindestens ein Metall der Gruppe bestehend aus Kupfer, Zinn, Zink, Chrom(III), Silber, Gold, Ruthenium, Platin, Palladium oder eine Legierung dieser ist

2. Verfahren gemäß Anspruch 1, **dadurch gekennzeichnet, daß** die erste metallische Schicht chemisch abgeschieden wird.

3. Verfahren gemäß Anspruch 1, **dadurch gekennzeichnet, daß** die erste abgeschiedene metallische Schicht elektrolytisch abgeschieden wird.

4. Verfahren gemäß mindestens einem der vorhergehenden Ansprüche, **dadurch gekennzeichnet, daß** das Metall der zweiten Metallschicht chemisch abgeschieden wird.

5. Verfahren gemäß einem oder mehreren der Ansprüche 1 bis 3, **dadurch gekennzeichnet, daß** das Metall der zweiten Schicht elektrolytisch abgeschieden wird.

6. Verfahren gemäß einem oder mehreren der vorhergehenden Ansprüche, wobei die zweite Metallschicht mit mindestens einer dritten Schicht überzogen wird, **dadurch gekennzeichnet, daß** zur Herstellung der dritten Metallschicht mindestens ein Metall der Gruppe bestehend aus Chrom oder Chromlegierungen beispielsweise mit Vanadium, Molybdän, Kohlenstoff, Phoshor oder Wolfram, aufweist.

7. Chrom oder Chromlegierungen mit Vanadium, Molybdän oder Wolfram abgeschieden wird.

8. Verfahren gemäß einem oder mehreren der Ansprüche 1 bis 5, wobei die zweite Metallschicht mit mindestens einer dritten Schicht überzogen wird, **dadurch gekennzeichnet, daß** zur Herstellung der dritten Metallschicht mindestens eine allein oder zusätzlich durch CVD oder PVD aufgebrachte Hartschicht wie Chromcarbid, Titaniumnitrid/-carbid, Zirkoniumnitrid/-carbid, Siliziumdioxid oder DLC (diamond like carbon) oder Kombinationen aus diesen Schichten aufgebracht wird.

9. Nickel und Chrom (VI) freie metallischen Mattschichten, hergestellt durch die Verfahrensschritte
a) Beschichten eines Substrats mit einer ersten matten Metallschicht
b) Metallisieren der ersten matten Metallschicht mit einer zweiten, den Matteffekt der ersten Metallschicht übernehmenden Metallschicht,
**dadurch gekennzeichnet, daß** die erste matte Metallschicht nickelfrei ist und die zweite Metallschicht frei von Nickel und Chrom (VI) ist, wobei das Metall zur Herstellung der ersten matten Metallschicht mindestens ein Metall der Gruppe bestehend aus Kupfer, Zinn, Zink, Chrom(III), Silber, Gold, Ruthenium, Platin, Palladium, oder eine Legierung ist und das Metall zur Herstellung der zweiten Metallschicht mindestens ein Metall der Gruppe bestehend aus Kupfer, Zinn, Zink, Chrom(III), Silber, Gold, Ruthenium, Platin, Palladium, oder eine Legierung ist.

10. Nickel und Chrom (VI) freie metallische Mattschichten gemäß Anspruch 7, **dadurch gekennzeichnet, dass** die zweite Metallschicht mit mindestens einer dritten Schicht überzogen ist, wobei die dritte Schicht mindestens ein Metall der Gruppe bestehend aus Chrom oder Chromlegierungen beispielsweise mit Vanadium, Molybdän, Kohlenstoff, Phoshor oder Wolfram, aufweist.

11. Nickel und Chrom (VI) freie metallische Mattschichten gemäß Anspruch 7, **dadurch gekennzeichnet, dass** die zweite Metallschicht mit mindestens einer dritten Schicht überzogen ist, wobei die dritte Schicht aus einer allein oder zusätzlich durch CVD oder PVD aufgebrachte Hartschicht wie Chromcarbid, Titaniumnitrid/-carbid, Zirkoniumnitrid/-carbid, Siliziumdioxid oder DLC (diamond like carbon) oder Kombinationen aus diesen Schichten gebildet wird.
